# EUROPÄISCHE PATENTSCHRIFT

(11) **EP 3 364 010 B1**
(45) Veröffentlichungstag und Bekanntmachung des Hinweises auf die Patenterteilung: **16.09.2020**
(21) Anmeldenummer: 18154391.9
(22) Anmeldetag: 31.01.2018
(51) Int. Cl.: F02B 75/04, F16C 7/06

(54) **PLEUEL FÜR EINE BRENNKRAFTMASCHINE MIT VARIABLER VERDICHTUNG**
CONNECTING ROD FOR A COMBUSTION ENGINE WITH VARIABLE COMPRESSION
BIELLE POUR UN MOTEUR À COMBUSTION INTERNE À COMPRESSION VARIABLE

(30) Priorität: 20.02.2017 DE 102017103379; 19.09.2017 DE 102017121630
(43) Veröffentlichungstag der Anmeldung: 22.08.2018
(73) Patentinhaber: ECO Holding 1 GmbH, 97828 Marktheidenfeld (DE)
(72) Erfinder: Huber, David, 63739 Aschaffenburg (DE); Schulze, Dietmar, 35516 Münzenberg (DE); Hutzelmann, Stefanie, 97782 Gräfendorf (DE)

(56) Entgegenhaltungen:
- DE-A1-102011 002 138
- DE-A1-102014 100 585
- DE-A1-102014 109 452
- DE-A1-102015 103 202
- DE-A1-102015 109 922

## Beschreibung

### Technisches Gebiet

Die Erfindung betrifft einen Pleuel für eine Brennkraftmaschine mit variabler Verdichtung, sowie eine Brennkraftmaschine mit variabler Verdichtung mit einem Pleuel.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulischen Umschaltventilen eine Exzenter-Verstelleinrichtung eines Pleuels betätigen.

Die DE 10 2014 100 585 A1 beschreibt einen Pleuel für eine Brennkraftmaschine mit variabler Verdichtung mit einer Exzenter-Verstelleinrichtung, bei welchem das Pleuellagerauge, der Exzenter sowie der Exzenterhebel jeweils eine abgeschrägte Kontur aufweisen.

### Offenbarung der Erfindung

Eine Aufgabe der Erfindung ist es, einen verbesserten, kostengünstigen Pleuel für eine Brennkraftmaschine mit variabler Verdichtung zu schaffen, welches prozesssicher herzustellen ist.

Eine weitere Aufgabe ist es, eine Brennkraftmaschine mit variabler Verdichtung mit einem solchen Pleuel zu schaffen.

Es wird ein Pleuel für eine Brennkraftmaschine mit variabler Verdichtung vorgeschlagen, umfassend ein Hublagerauge zur Anbindung des Pleuels an eine Kurbelwelle der Brennkraftmaschine, ein Pleuellagerauge zur Anbindung des Pleuels an einen Zylinderkolben der Brennkraftmaschine, sowie eine Exzenter-Verstelleinrichtung zur Verstellung einer effektiven Pleuelstangenlänge, wobei die Exzenter-Verstelleinrichtung einen mit einem Exzenterhebel zusammenwirkenden und drehfest verbundenen Exzenter aufweist, in welchem bestimmungsgemäß ein Kolbenbolzen des Zylinderkolbens aufnehmbar ist. Die Exzenter-Verstelleinrichtung weist zwei Zylinder mit jeweils einem Kolben auf, der in einer Zylinderbohrung verschiebbar geführt und mit einer Stützstange verbunden ist. Der Exzenterhebel weist ein oder mehrere Exzenterhebelsegmente auf und ist mit den Stützstangen gelenkig verbunden. Das Pleuellagerauge und der Exzenter weisen erste Teilbereiche mit ersten Stirnflächenkonturen und zweite Teilbereiche mit zweiten Stirnflächenkonturen auf. Erfindungsgemäß umschließt der Exzenterhebel den Exzenter ausschließlich in dem ersten Teilbereich des Exzenters.

Der erfindungsgemäße Pleuel umfasst eine Exzenter-Verstelleinrichtung mit einem Exzenterhebel, welcher ein gegenüber dem Stand der Technik verbessertes Design aufweist. Der Exzenterhebel weist ein oder mehrere Exzenterhebelsegmente auf, welche mit dem Exzenter verbunden sind, diesen jedoch nur bereichsweise in einem ersten Teilbereich umschließen. Der Exzenterhebel weist auch nicht die übliche 4°-Schräge als Anstellung auf. Insgesamt ist der Exzenterhebel, welcher prozesssicher hergestellt werden kann, kostengünstiger und leichter als vergleichbare Komponenten nach dem Stand der Technik.

Ein abgeschrägter Abschnitt des Exzenterhebels kann mit der erfindungsgemäßen Lösung des Exzenterhebels entfallen und der Exzenterhebel, der zweiteilig mit zwei Exzenterhebelsegmenten ausgebildet sein kann, weist damit nur ebenflächige zueinander parallele Verbindungsabschnitte auf, welche mit dem Exzenter drehfest verbunden sind. Die Verbindungsabschnitte umschließen jeweils mit einer halbkreisförmigen Innenfläche den ersten Teilbereich des Exzenters und des Pleuelauges, und sind wenigstens bereichsweise ebenflächig ausgebildet.

Vorteilhaft kann durch den Wegfall eines oberen abgeschrägten Exzenterhebelabschnitts beispielsweise eine geringere Ausschussquote in einem Feinstanz-Fertigungsprozess bei der Fertigung des Pleuels erzielt werden.

Die Gesamtmasse des Pleuels, insbesondere die oszillierende Pleuelmasse kann gegenüber dem Stand der Technik reduziert werden. Der Exzenter kann steiler angestellt werden und somit leichter werden. Dies wirkt sich wiederum positiv auf mögliche Vibrationen des Pleuels und damit auf den Brennstoffverbrauch einer Brennkraftmaschine aus, welche mit dem Pleuel betrieben wird.

Der Freigang im Kolben der Brennkraftmaschine kann weiter erhöht werden. Durch den erhöhten Bauraum kann ein kostengünstigerer, bauraumoptimierter Zylinderkolben verwendet werden.

Der Exzenterhebel bzw. dessen Exzenterhebelsegmente sind mit dem Exzenter verschweißt vorgesehen. Als Schweißverfahren wird vorzugsweise ein Laserschweißverfahren eingesetzt. Erfindungsgemäß lässt sich der Laserschweißprozess zum Verbinden von Exzenterhebel und Exzenter bei der Fertigung des Pleuels vereinfachen, da die gesamte Schweißnaht sich in einer zweidimensionalen Ebene befindet und somit der Laserstrahl keine dreidimensionale Kontur abfahren muss. Durch Entfall einer üblicherweise nötigen Schweißnaht im abgeschrägten Exzenterabschnitt wird beim Laserschweißprozess weniger Wärme in die Bauteile abgeführt, da die Exzenterhebelsegmente den Exzenter nur bereichsweise umschließen, sodass ein geringerer Verzug des Exzenterhebels erreicht werden kann.

Gemäß einer vorteilhaften Ausgestaltung können die ersten Teilbereiche zueinander parallele Stirnflächenkonturen und die zweiten Teilbereiche abgeschrägte Stirnflächenkonturen aufweisen. Auf diese Weise lässt sich der Bauraum, den der Pleuel im Zylinder der Brennkraftmaschine benötigt, weiter vermindern, so dass Zylinderkolben mit für die Verbrennung günstigeren Kolbenkonturen eingesetzt werden können. Auch kann zusätzlich weiter Gewicht des Pleuels eingespart werden, was wiederum den Kraftstoffverbrauch der Brennkraftmaschine reduziert.

Gemäß einer vorteilhaften Ausgestaltung kann zwischen den ersten Stirnflächenkonturen und den zweiten Stirnflächenkonturen wenigstens eine Stufe ausgebildet sein, insbesondere können die zweiten Stirnflächenkonturen einen geringeren Abstand voneinander aufweisen als die ersten Stirnflächenkonturen. Durch die gestufte Ausbildung der Stirnflächenkonturen von Pleuellagerauge und Exzenter kann der Bauraum des Pleuels vorteilhaft weiter reduziert werden. Zusätzlich lässt sich die Gesamtmasse des Pleuels und insbesondere der oszillierenden Teile des Pleuels vermindern, was wiederum den Kraftstoffverbrauch der Brennkraftmaschine reduziert

Gemäß einer vorteilhaften Ausgestaltung können die Exzenterhebelsegmente zueinander parallele Verbindungsabschnitte aufweisen, welche mit dem Exzenter drehfest verbunden sind. Die Exzenterhebelsegmente werden üblicherweise mit dem Exzenter verschweißt. Parallele Verbindungsabschnitte der Exzenterhebelsegmente begünstigen diesen Schweißprozess, da der Vormontageprozess erleichtert wird und außerdem die Schweißnaht so für jedes Exzenterhebelsegment in einer Ebene liegt und somit mit dem Laserstrahl keine dreidimensionale Kontur abgefahren werden muss.

Gemäß einer vorteilhaften Ausgestaltung können die Verbindungsabschnitte eine halbkreisförmige Innenfläche aufweisen, welche den ersten Teilbereich umschließt. Die Innenfläche der Verbindungsabschnitte stellt die Schnittstelle zum Exzenter dar, welche beispielsweise mit dem Exzenter und dem Pleuellagerauge verschweißt wird. Da der Exzenter eine kreisförmige Außenkontur aufweist, lässt sich eine halbkreisförmige Innenfläche der Verbindungsabschnitte besonders günstig mit dem Exzenter verschweißen. Ein geringer Überstand des Exzenters begünstigt weiter den Schweißprozess, so dass vorteilhaft beispielsweise ohne Zusatzwerkstoff geschweißt werden kann.

Erfindungsgemäß sind die ersten Teilbereiche dem Hublagerauge zugewandt und die zweiten Teilbereiche dem Hublagerauge abgewandt vorgesehen. Da der Exzenterhebel nur die ersten Teilbereiche von Exzenter und Pleuellagerauge umschließt, ist der Exzenterhebel ebenfalls auf der Seite des Hublagerauges mit dem Exzenter verbunden. Die durch den Verbrennungsdruck aufgebrachte Belastung auf den Pleuel ist auf der dem Hublagerauge zugewandten Seite der Verbindung Exzenter und Exzenterhebel am größten. Mittels einer solchen erfindungsgemäßen Anordnung von Exzenter und Exzenterhebel kann diese Belastung vorteilhaft aufgefangen werden.

Gemäß einer vorteilhaften Ausgestaltung kann eine Trennungslinie zwischen dem ersten Teilbereich und dem zweiten Teilbereich durch die Exzenterachse verlaufen. Durch eine solche Anordnung der Trennungslinie zwischen dem ersten Teilbereich und dem zweiten Teilbereich lässt sich sowohl der benötigte Bauraum als auch das Gewicht des Pleuels vorteilhaft gestalten, was günstige Zylinderkolbenformen und günstige Verbrauchswerte der Brennkraftmaschine ermöglicht.

Gemäß einer vorteilhaften Ausgestaltung können die Verbindungsabschnitte wenigstens bereichsweise ebenflächig ausgebildet sein. Die Exzenterhebelsegmente werden üblicherweise mit dem Exzenter verschweißt. Ebene Flächen der Verbindungsabschnitte der Exzenterhebelsegmente begünstigen diesen Schweißprozess, da der Vormontageprozess erleichtert wird und außerdem die Schweißnaht so für jedes Exzenterhebelsegment in einer Ebene liegt und somit mit dem Laserstrahl keine dreidimensionale Kontur abgefahren werden muss.

Gemäß einer vorteilhaften Ausgestaltung kann der Exzenterhebel aus einem Stahl-Feinguss ausgebildet sein. Auf diese Weise lassen sich die Exzenterhebelsegmente besonders kostengünstig und prozesssicher herstellen.

Gemäß einer vorteilhaften Ausgestaltung kann der Exzenterhebel mittels eines Metallspritzguss-Verfahrens hergestellt vorgesehen sein. Alternativ ist auch die Herstellung der Exzenterhebelsegmente mittels eines Metallspritzguss-Verfahrens in einem sogenannten Metall-Injection-Moulding (MIM) - Prozess vorteilhaft, um kostengünstige und prozesssicher gefertigte Bauteile zu erhalten.

Gemäß einer vorteilhaften Ausgestaltung können die Stützstangen mittels Verbindungsbolzen gelenkig mit dem Exzenterhebel verbunden sein. Durch diese Anbindung der Stützstangen an den Exzenterhebel mittels Verbindungsbolzen lässt sich ein großer Bewegungsspielraum der Exzenter-Verstelleinrichtung vorteilhaft realisieren. Auch kann die Montage eines solchen Pleuels günstig vorgenommen werden.

Gemäß einer vorteilhaften Ausgestaltung können die Stützstangen mittels einer Kugelkopfverbindung gelenkig mit dem Exzenterhebel verbunden sein. Alternativ ist auch die Anbindung der Stützstangen an den Exzenterhebel mittels einer Kugelkopfverbindung vorteilhaft, weil sich ein entsprechender Bewegungsspielraum von Exzenterhebel und Stützstangen zueinander sehr günstig ergibt. Damit lässt sich die Geometrie der Zylinderkolben für einen günstigen Verbrennungsprozess leichter optimieren.

Gemäß einer vorteilhaften Ausgestaltung kann der Exzenterhebel mit dem Exzenter verschweißt vorgesehen sein. Ein Schweißprozess kann eine besonders zuverlässige Verbindung zwischen den Bauteilen Exzenterhebelsegmente und Exzenter auch für die besonders hohen Anforderungen eines verstellbaren Pleuels einer Brennkraftmaschine herstellen. Insbesondere stellt ein solcher Schweißprozess die prozesssichere Anbindung von Exzenterhebelsegmenten und Exzenter bei einer Anbindung nur in einem ersten Teilbereich von Pleuellagerauge und Exzenter sicher.

Gemäß einer vorteilhaften Ausgestaltung kann der Exzenterhebel entlang der Innenfläche mit dem Exzenter verschweißt vorgesehen sein. Die Innenfläche der Verbindungsabschnitte stellt die Schnittstelle zum Exzenter dar, welche beispielsweise mit dem Exzenter und dem Pleuellagerauge verschweißt wird. Da der Exzenter eine kreisförmige Außenkontur aufweist, lässt sich eine halbkreisförmige Innenfläche der Verbindungsabschnitte besonders günstig mit dem Exzenter verschweißen. Ein geringer Überstand des Exzenters begünstigt weiter den Schweißprozess, so dass vorteilhaft beispielsweise ohne Zusatzwerkstoff geschweißt werden kann.

Nach einem weiteren Aspekt der Erfindung wird eine Brennkraftmaschine mit wenigstens einem Pleuel vorgeschlagen. Dabei kann vorteilhaft ein Pleuel wie vorstehend beschrieben verwendet werden, um auf günstige Weise eine Exzenter-Verstelleinrichtung zu realisieren sowie einen vorteilhaften Verbrennungsprozess und damit Kraftstoffverbrauch in der Brennkraftmaschine umzusetzen.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt.

### Es zeigen beispielhaft:

- Fig. 1: eine Seitenansicht eines erfindungsgemäßen Pleuels in einer ersten Stellung mit eingezeichneter Schnittebene A-A;
- Fig. 2: eine Vorderansicht des Pleuels gemäß Fig. 1;
- Fig. 3: einen Längsschnitt in der Schnittebene A-A des Pleuels gemäß Fig. 1;
- Fig. 4: eine perspektivische Darstellung des Pleuels gemäß Fig. 1;
- Fig. 5: eine perspektivische Darstellung des Exzenterhebels mit verbundenen Stützstangen des Pleuels gemäß Fig. 1;
- Fig. 6: eine Seitenansicht des erfindungsgemäßen Pleuels in einer zweiten Stellung mit eingezeichneter Schnittebene A-A;
- Fig. 7: eine Vorderansicht des Pleuels gemäß Fig. 6;
- Fig. 8: einen Längsschnitt in der Schnittebene A-A des Pleuels gemäß Fig. 6;
- Fig. 9: eine perspektivische Darstellung des Pleuels gemäß Fig. 6 und
- Fig. 10: eine perspektivische Darstellung des Exzenterhebels mit verbundenen Stützstangen des Pleuels gemäß Fig. 6.

### Ausführungsformen der Erfindung

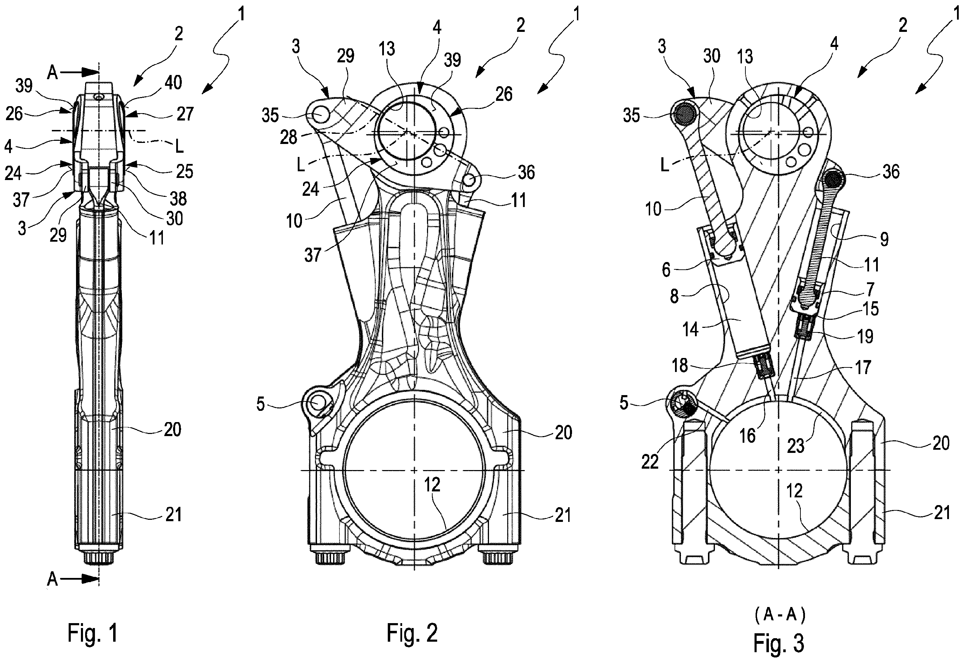

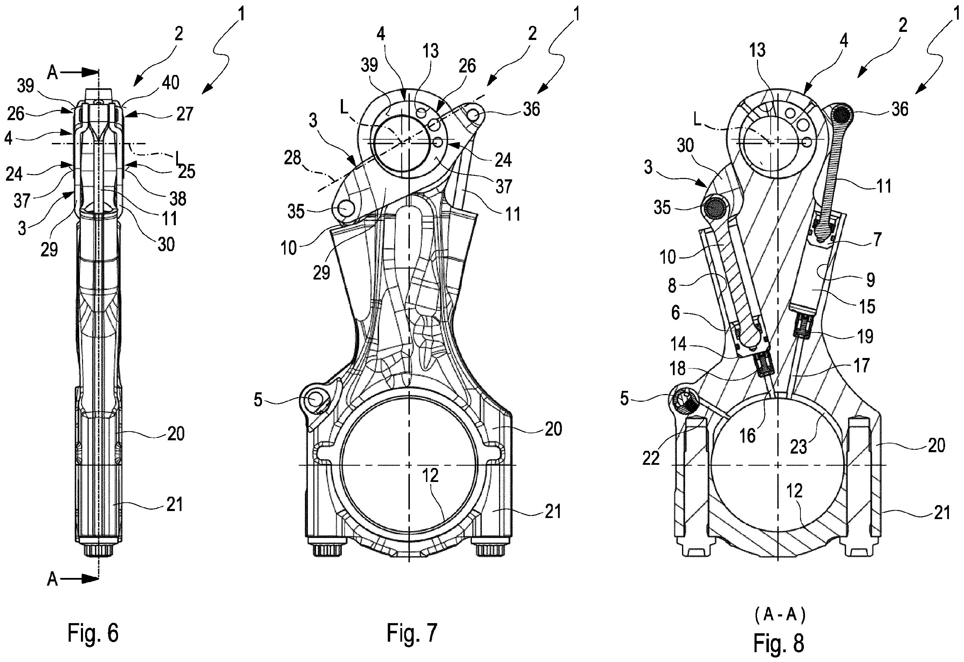

Die Figuren 1 bis 4 zeigen in schematischer Darstellung einen erfindungsgemäßen Pleuel 1 für eine Brennkraftmaschine mit variabler Verdichtung in einer ersten Stellung hoher Verdichtung mit einer Exzenter-Verstelleinrichtung 2 zur Verstellung einer effektiven Pleuelstangenlänge, welche als Abstand der Mittelachse eines Hublagerauges 12 von der Mittelachse der Bohrung eines Exzenters 4 definiert ist. Die Figuren 6 bis 9 zeigen den Pleuel 1 in einer zweiten Stellung niedriger Verdichtung.

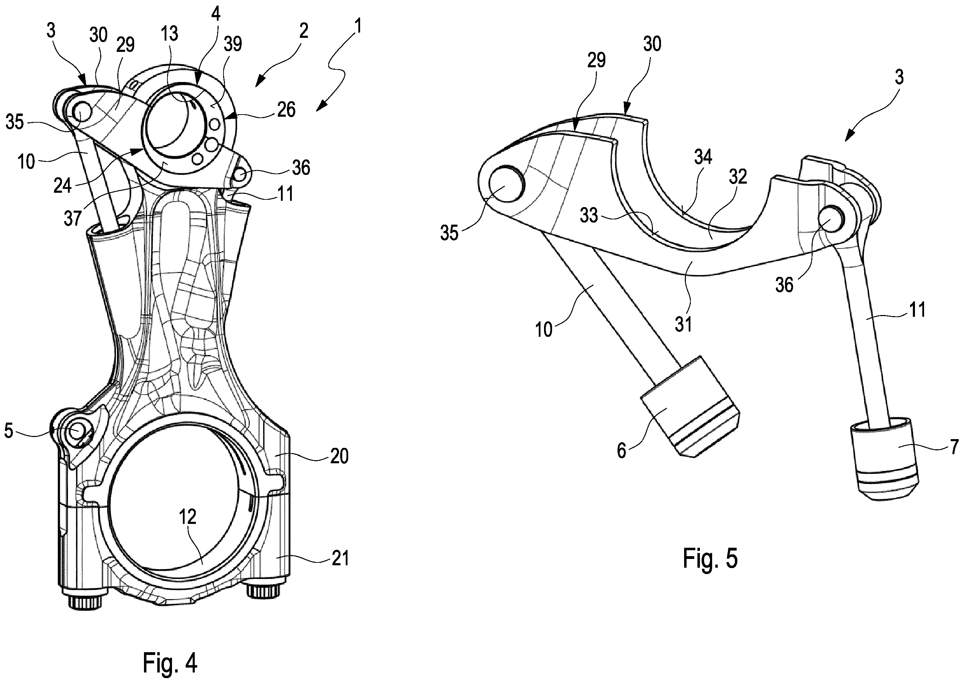

Figur 1 zeigt eine Seitenansicht des erfindungsgemäßen Pleuels 1 in einer ersten Stellung für hohe Verdichtung mit eingezeichneter Schnittebene A-A. Figur 2 zeigt eine Vorderansicht des Pleuels 1 gemäß Figur 1, während Figur 3 einen Längsschnitt des Pleuels 1 in der Schnittebene A-A des Pleuels gemäß Figur 1 und Figur 4 eine perspektivische Darstellung des Pleuels 1 gemäß Figur 1 zeigt. Die Stellung der Exzenter-Verstelleinrichtung 2 entspricht einer hohen Verdichtung der Brennkraftmaschine. Dabei weist die effektive Pleuellänge, nämlich der Abstand zwischen der Mittelachse des Hublagerauges und der Mittelachse der Bohrung des Exzenters 4, der Exzenterachse L, einen maximalen Wert auf.

Wie in den Figuren 1 bis 4 zu erkennen ist, weist die Exzenter-Verstelleinrichtung 2 den mit einem ein oder mehrteiligen Exzenterhebel 3 zusammenwirkenden Exzenter 4 auf, in welchem ein nicht dargestellter Kolbenbolzen eines Zylinderkolbens aufnehmbar ist. Ein Verstellweg der Exzenter-Verstelleinrichtung 2 ist mittels eines Umschaltventils 5 verstellbar.

Eine Verdrehung der verstellbaren Exzenter-Verstelleinrichtung 2 wird durch Einwirken von Massen- und Lastkräften des Verbrennungsmotors initiiert, die bei einem Arbeitstakt des Verbrennungsmotors auf die Exzenter-Verstelleinrichtung 2 wirken. Während eines Arbeitstaktes verändern sich die Wirkungsrichtungen der auf die Exzenter-Verstelleinrichtung 2 wirkenden Kräfte kontinuierlich. Die Drehbewegung oder Verstellbewegung wird durch einen oder mehrere mit Hydraulikflüssigkeit, insbesondere mit Motoröl, beaufschlagte, im Pleuel 1 integrierte Kolben 6, 7 unterstützt, bzw. die Kolben 6, 7 verhindern ein Rückstellen der Exzenter-Verstelleinrichtung 2 aufgrund variierender Kraftwirkungsrichtungen der auf die Exzenter-Verstelleinrichtung 2 wirkenden Kräfte.

Die Kolben 6, 7 sind jeweils in einer Zylinderbohrung 8, 9 eines Hydraulikzylinders 14, 15 des Pleuels 1 verschiebbar geführt und mit Stützstangen 10, 11 verbunden, welche ihrerseits mit dem Exzenterhebel 3 gelenkig verbunden sind.

Der Pleuel 1 weist das Hublagerauge 12 zur Anbindung des Pleuels 1 an eine Kurbelwelle einer Brennkraftmaschine sowie ein Pleuellagerauge 13 zur Anbindung des Pleuels 1 an den Zylinderkolben der Brennkraftmaschine auf.

Die Kolben 6, 7 sind in den Zylinderbohrungen 8, 9 der als Hydraulikkammern ausgebildeten Zylindern 14, 15 verschiebbar angeordnet und über Zuläufe 16, 17 von dem Hublagerauge 12 aus mit Hydraulikflüssigkeit, beispielsweise Motoröl über Rückschlagventile 18, 19 beaufschlagt. Diese verhindern dabei ein Rückfließen der Hydraulikflüssigkeit aus den Hydraulikkammern 14, 15 zurück in die Zuläufe 16, 17, ermöglichen jedoch ein Nachsaugen von Hydraulikflüssigkeit in die Hydraulikkammern 14, 15.

Die Hydraulikkammern 14, 15 sind weiter über nicht dargestellte Abläufe mit dem Umschaltventil 5 verbunden, welches als Hydraulikventil oder als mechanisches Ventil ausgebildet sein kann und über eine Ablaufleitung 22 mit dem Hublagerauge 12 verbunden ist.

Wie beispielsweise aus Figur 3 ersichtlich ist, weist der Pleuel 1 einen Pleuelkörper 20 und einen daran befestigten Pleueldeckel 21 auf.

Auf einem Umfang des Hublagerauges 12 ist im Bereich des Pleuelkörpers 20 eine Nut 23 vorgesehen, in welche die Zuläufe 16, 17 sowie die Ablaufleitung 22 münden. Dadurch, dass die Nut 23 nur auf einem Teil des Umfangs des Hublagerauges 12 angeordnet ist, wird auch die Tragfähigkeit des Lagers in dem Hublagerauge 12 möglichst wenig beeinträchtigt.

Der Aufbau des beschriebenen Pleuels 1 ist nur beispielhaft dargestellt und die erfindungsgemäße Exzenterhebelverbindung kann auch in anderen Ausführungsvarianten eines Pleuels mit einer Exzenter-Verstelleinrichtung Anwendung finden. So ist es beispielsweise möglich, das Umschaltventil 5 im Bereich des Pleueldeckels 21 anzuordnen. Ferner können die beschriebenen Rückschlagventile 18, 19 im Umschaltventil 5 integriert vorgesehen sein. Auch die hydraulische Versorgung der Hydraulikkammern 14, 15 kann von der beschriebenen Ausführung abweichen.

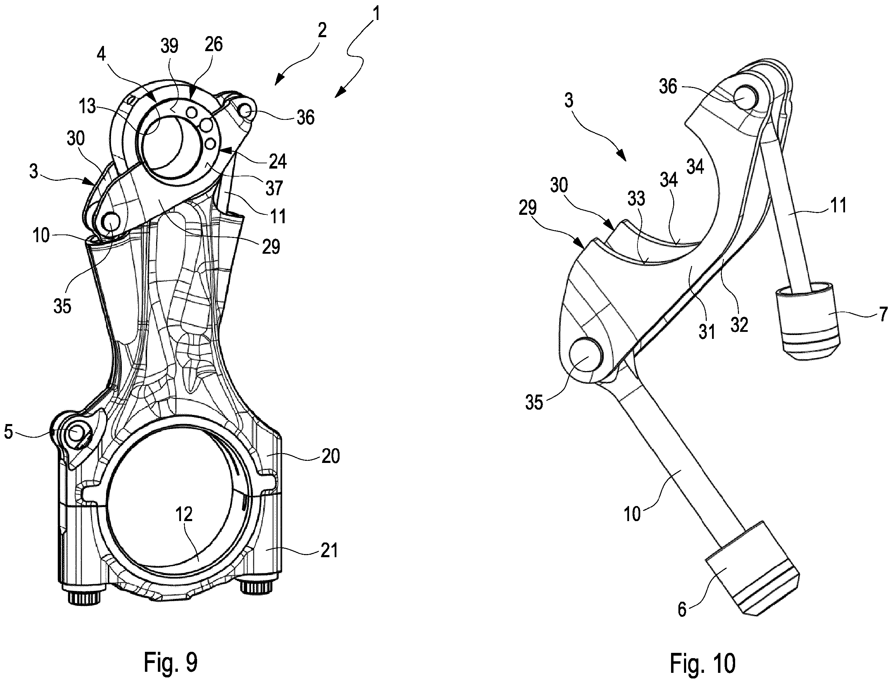

Der ein oder mehrteilige Exzenterhebel 3 wirkt mit dem Exzenter 4 zusammen und ist drehfest mit diesem verbunden. Der mit den Stützstangen 10, 11 gelenkig verbundene Exzenterhebel 3 ist in Figur 5 in einer Stellung des Pleuels 1 für hohe Verdichtung und in Figur 10 in einer Stellung für niedrige Verdichtung dargestellt.

Bekannte Pleuel weisen ein Pleuellagerauge, einen Exzenter sowie einen Exzenterhebel mit jeweils in Teilbereichen abgeschrägter Kontur auf, um Gewicht zu sparen sowie den Fertigungs- und Montageaufwand zu reduzieren. Zudem kann der benötigte Bauraum der Exzenter-Verstelleinrichtung verringert werden und deren Verdrehbarkeit verbessert werden.

Um einen weiter hinsichtlich Kosten und Gewicht verbesserten Pleuel für eine Brennkraftmaschine mit variabler Verdichtung zu schaffen, welcher zudem prozesssicher herzustellen ist, ist erfindungsgemäß vorgesehen, dass das Pleuellagerauge 13 und der Exzenter 4 in ersten Teilbereichen 24, 25 eine erste Stirnflächenkontur 37, 38 und in zweiten Teilbereichen 26, 27 eine zweite Stirnflächenkontur 39, 40 aufweisen und der Exzenterhebel 3 den Exzenter 4 ausschließlich in dem ersten Teilbereich 24, 25 des Exzenters 4 umschließt.

Wie aus den Figuren 2 und 3 ersichtlich ist, sind die ersten Teilbereiche 24, 25 dem Hublagerauge 12 zugewandt und die zweiten Teilbereiche 26, 27 dem Hublagerauge 12 abgewandt vorgesehen. Trennungslinien, welche die ersten und zweiten Teilbereiche 24, 25, 26, 27 trennen, können dabei unterschiedlich positioniert sein. Die Trennungslinie 28 des Exzenters 4 ist in Figur 2 ersichtlich und verläuft durch die Exzenterachse L. Bei dem in den Figuren 1 bis 10 gezeigten Ausführungsbeispiel sind die ersten Stirnflächenkonturen 37, 38 parallel zueinander und die zweiten Stirnflächenkonturen 39, 40 jeweils abgeschrägt ausgebildet.

In einer alternativen Ausführungsform kann auch zwischen den ersten Stirnflächenkonturen 37, 38 und den zweiten Stirnflächenkonturen 39, 40 wenigstens eine Stufe ausgebildet sein, insbesondere können die zweiten Stirnflächenkonturen 39, 40 einen geringeren Abstand voneinander aufweisen als die ersten Stirnflächenkonturen 37, 38. Auch mit dieser Ausführungsform lässt sich Bauraum des Pleuels 1 einsparen.

Ein abgeschrägter Abschnitt des Exzenterhebels 3 kann mit der erfindungsgemäßen Lösung des Exzenterhebels 3 entfallen und der Exzenterhebel 3, der in der in Figur 5 gezeigten Ausführung zweiteilig mit zwei Exzenterhebelsegmenten 29, 30 ausgebildet ist, weist damit nur ebenflächige zueinander parallele Verbindungsabschnitte 31, 32 auf, welche mit dem Exzenter 4 drehfest verbunden sind. Die Verbindungsabschnitte 31, 32 umschließen jeweils mit einer halbkreisförmigen Innenfläche 33, 34 den ersten Teilbereich 24, 25 des Exzenters 4, wie beispielsweise Figur 4 zu entnehmen ist und sind wenigstens bereichsweise ebenflächig ausgebildet.

Die Exzenterhebelsegmente 29, 30 sind vorzugsweise aus einem Stahl-Feinguss ausgebildet und mittels eines Feinstanz-Prozesses hergestellt. Die ebenen Verbindungsabschnitte 31, 32 ermöglichen einen vereinfachten und verbesserten Fertigungsprozess mit einer geringen Ausschussquote. Alternativ kann der Exzenterhebel 3 mittels eines Metallspritzguss-Verfahrens in einem sogenannten Metall-Injection-Moulding (MIM) - Prozess hergestellt vorgesehen sein.

Zudem kann die Gesamtmasse des Pleuels 1, insbesondere die oszillierende Pleuelmasse dadurch reduziert werden. Der Exzenter 4 kann steiler angestellt werden und somit leichter werden. Dies wirkt sich wiederum positiv auf mögliche Vibrationen des Pleuels 1 und auf den Brennstoffverbrauch der Brennkraftmaschine aus, welche mit dem Pleuel 1 betrieben wird.

Der Freigang im Zylinderkolben kann weiter erhöht werden, wodurch ein kostengünstigerer, bauraumoptimierter Verbrennungskolben verwendet werden kann.

Der Exzenterhebel 3 bzw. dessen Exzenterhebelsegmente 29, 30 sind mit dem Exzenter 4 verschweißt vorgesehen. Als Schweißverfahren wird vorzugsweise ein Laserschweißverfahren eingesetzt. Dieser Laserschweißprozess wird erfindungsgemäß vereinfacht, da die gesamte Schweißnaht sich in einer zweidimensionalen Ebene befindet und der verwendete Laserkopf keine dreidimensionale Kontur abfahren muss. Vorzugsweise ist der Exzenterhebel 3 entlang der Innenfläche 33, 34 der Exzenterhebelsegmente 29, 30 mit dem Exzenter 4 verschweißt vorgesehen.

Durch Entfallen der Schweißnaht in einem abgeschrägten Exzenterabschnitt wird beim Laserschweißprozess weniger Wärme in die Bauteile abgeführt, sodass ein geringerer Verzug erreicht werden kann.

Die Stützstangen 10, 11 sind gemäß dem gezeigten Ausführungsbeispiel mittels Verbindungsbolzen 35, 36, vorzugsweise Zylinderrollen, gelenkig mit dem Exzenterhebel 3 verbunden.

Alternativ ist auch eine Kugelkopfverbindung im Rahmen der Erfindung denkbar, die vorzugsweise bei einer nicht dargestellten, einteiligen Ausführung des Exzenterhebels 3 Anwendung findet. Durch die einteilige Fertigung des Exzenterhebels 3 entfällt eine aufwendige Montage mehrerer Exzenterhebelsegmente und Montageungenauigkeiten spielen keine Rolle. Bei der Fertigung kommt es nur noch auf die Gesamttoleranz des Gussprozesses und die Maßhaltigkeit bei der anschließenden Endbearbeitung (beispielweise Sintern) an, die prozessbedingt sehr hoch ist. Die beim Sintern auftretende Schwindung kann als Aufmaß in das Werkzeug eingerechnet werden. Auch ist die Geometrie des Exzenterhebels 3 in großer Vielfalt darstellbar.

Der einteilige Exzenterhebel 3 weist zwei Exzenterhebelsegmente auf, welche an diametral angeordneten Endbereichen verbunden sind. Die Stützstangen 10,11 können in dem Exzenterhebel 3 durch wenigstens ein Sicherungselement verliersicher gelagert und so gegen ein Herausfallen bzw. Verlieren aus dem Exzenterhebel 3 gesichert werden. Dazu kann der Exzenterhebel 3 zur Lagerung eines Kugelkopfes der Stützstangen 10, 11 einen Aufnahmebereich in Form einer Kugelkopfaufnahme aufweisen, wobei an dem Aufnahmebereich zur Sicherung des Kugelkopfes gegen Herausgleiten aus dem Aufnahmebereich das Sicherungselement vorgesehen ist. In dem Aufnahmebereich ist das Sicherungselement beispielsweise radial nach innen ragend angeordnet, das von einer ersten Position zum Einführen des Kugelkopfes in den Aufnahmebereich in eine radial nach innen ragende Position zur Sicherung des Kugelkopfes im Aufnahmebereich bewegbar ist. Das Bewegen des Sicherungselements in die radial nach innen ragende Position kann dabei vor oder nach der Montage des Exzenterhebels 3 im Pleuel 1 erfolgen. Das Sicherungselement kann als ein oder mehrere Laschen ausgebildet sein, welche nach einem Umbiegen den Kugelkopf der Stützstangen 10, 11 teilweise umgreifen. Damit ist es möglich, dass die Stützstangen 10, 11 sich in einem möglichst großen Winkelbereich relativ zum Exzenterhebel 3 bewegen können.

Figur 6 zeigt weiter eine Seitenansicht des erfindungsgemäßen Pleuels 1 in einer zweiten Stellung für niedrige Verdichtung mit eingezeichneter Schnittebene A-A. Figur 7 zeigt eine Vorderansicht des Pleuels 1 gemäß Figur 6, während Figur 8 einen Längsschnitt des Pleuels 1 in der Schnittebene A-A des Pleuels gemäß Figur 6 und Figur 9 eine perspektivische Darstellung des Pleuels 1 gemäß Figur 6 zeigt. Die Stellung der Exzenter-Verstelleinrichtung 2 entspricht einer niedrigen Verdichtung der Brennkraftmaschine. Dabei weist die effektive Pleuellänge, der Abstand zwischen der Mittelachse des Hublagerauges und der Mittelachse der Bohrung des Exzenters 4, der Exzenterachse L, einen minimalen Wert auf.

In Figur 10 ist der mit den Stützstangen 10, 11 verbundene Exzenterhebel 3 in der entsprechenden Stellung für niedrige Verdichtung gemäß den Figuren 6 bis 9 dargestellt.

## Patentansprüche

1. Pleuel (1) für eine Brennkraftmaschine mit variabler Verdichtung, umfassend ein Hublagerauge (12) zur Anbindung des Pleuels (1) an eine Kurbelwelle der Brennkraftmaschine,
ein Pleuellagerauge (13) zur Anbindung des Pleuels (1) an einen Zylinderkolben der Brennkraftmaschine,
eine Exzenter-Verstelleinrichtung (2) zur Verstellung einer effektiven Pleuelstangenlänge (30), wobei die Exzenter-Verstelleinrichtung (2) einen mit einem Exzenterhebel (3) zusammenwirkenden und drehfest verbundenen Exzenter (4) aufweist, in welchem bestimmungsgemäß ein Kolbenbolzen des Zylinderkolbens aufnehmbar ist,
wobei die Exzenter-Verstelleinrichtung (2) zwei Zylinder (14, 15) mit jeweils einem Kolben (6, 7) aufweist, der in einer Zylinderbohrung (8, 9) verschiebbar geführt und mit einer Stützstange (10, 11) verbunden ist,
wobei der Exzenterhebel (3) mehrere Exzenterhebelsegmente (29, 30) aufweist und mit den Stützstangen (10, 11) gelenkig verbunden ist,
wobei das Pleuellagerauge (13) und der Exzenter (4) jeweils Stirnflächen mit ersten, als Teilstirnflächen (37, 38) ausgebildeten, dem Hublagerauge (12) zugewandten Teilbereichen (24, 25) und zweiten, als Teilstirnflächen (39, 40) ausgebildeten, dem Hublagerauge (12) abgewandten Teilbereichen (26, 27) aufweisen, wobei eine Trennungslinie (28) die jeweiligen Teilbereiche (24, 25, 26, 27) der Stirnflächen trennt,
**dadurch gekennzeichnet, dass** der Exzenterhebel (3) den Exzenter (4) ausschließlich in dem ersten Teilbereich (24, 25) des Exzenters (4) derart umschließt, dass der Exzenter (4) lediglich bereichsweise umschlossen ist.

2. Pleuel nach Anspruch 1, **dadurch gekennzeichnet, dass** die ersten Teilbereiche (24, 25) zueinander parallele Teilstirnflächen (37, 38) und die zweiten Teilbereiche (26, 27) zueinander geneigte, abgeschrägte Teilstirnflächen (39, 40) aufweisen.

3. Pleuel nach Anspruch 1 oder 2, **dadurch gekennzeichnet, dass** zwischen den ersten Teilstirnflächen (37, 38) und den zweiten Teilstirnflächen (39, 40) wenigstens eine Stufe ausgebildet ist, insbesondere wobei die zweiten Teilstirnflächen (39, 40) einen geringeren Abstand voneinander aufweisen als die ersten Teilstirnflächen (37, 38).

4. Pleuel nach einem der vorhergehenden Ansprüche, **dadurch gekennzeichnet, dass** die Exzenterhebelsegmente (29, 30) zueinander parallele Verbindungsabschnitte (31, 32) aufweisen, welche mit dem Exzenter (4) drehfest verbunden sind.

5. Pleuel nach Anspruch 4, **dadurch gekennzeichnet, dass** die Verbindungsabschnitte (31, 32) jeweils eine halbkreisförmige Ausnehmung aufweisen, welche den ersten Teilbereich (24, 25) umschließt.

6. Pleuel nach einem der vorhergehenden Ansprüche, wobei die Trennungslinie (28) zwischen dem ersten Teilbereich (24, 25) und dem zweiten Teilbereich (26, 27) durch die Exzenterachse (L) verläuft.

7. Pleuel nach einem der vorhergehenden Ansprüche, **dadurch gekennzeichnet, dass** die Verbindungsabschnitte (31, 32) wenigstens bereichsweise ebenflächig ausgebildet sind.

8. Pleuel nach einem der vorhergehenden Ansprüche, wobei der Exzenterhebel (3) aus einem Stahl-Feinguss ausgebildet ist.

9. Pleuel nach einem der Ansprüche 1 bis 7, **dadurch gekennzeichnet, dass** der Exzenterhebel (3) mittels eines Metallspritzguss-Verfahrens hergestellt vorgesehen ist.

10. Pleuel nach einem der vorhergehenden Ansprüche, **dadurch gekennzeichnet, dass** der Exzenterhebel (3) und die Exzenterhebelsegmente (29, 30) einteilig ausgebildet sind.

11. Pleuel nach einem der vorhergehenden Ansprüche, **dadurch gekennzeichnet, dass** die Stützstangen (10, 11) mittels Verbindungsbolzen (35, 36) gelenkig mit dem Exzenterhebel (3) verbunden sind.

12. Pleuel nach einem der vorhergehenden Ansprüche 1 bis 10, **dadurch gekennzeichnet, dass** die Stützstangen (10, 11) mittels einer Kugelkopfverbindung gelenkig mit dem Exzenterhebel (3) verbunden sind.

13. Pleuel nach einem der vorhergehenden Ansprüche, **dadurch gekennzeichnet, dass** der Exzenterhebel (3) mit dem Exzenter (4) verschweißt vorgesehen ist.

14. Brennkraftmaschine mit wenigstens einem Pleuel (1) nach einem der vorhergehenden Ansprüche.

## Claims

1. Connecting rod (1) for an internal combustion engine with variable compression, comprising
a crank bearing eye (12) for the connection of the connecting rod (1) to a crankshaft of the internal combustion engine,
a connecting-rod bearing eye (13) for the connection of the connecting rod (1) to a cylinder piston of the internal combustion engine,
an eccentric adjusting device (2) for adjusting an effective connecting-rod length (30), wherein the eccentric adjusting device (2) has an eccentric (4) which interacts with, and which is connected rotationally conjointly to, an eccentric lever (3) and in which a piston pin of the cylinder piston can be received in an intended manner,
wherein the eccentric adjusting device (2) has two cylinders (14, 15) with in each case one piston (6, 7) which is guided displaceably in a cylinder bore (8, 9) and which is connected to a support rod (10, 11),
wherein the eccentric lever (3) has multiple eccentric lever segments (29, 30) and is articulatedly connected to the support rods (10, 11),
wherein the connecting-rod bearing eye (13) and the eccentric (4) each have face surfaces with first subregions (24, 25), which are formed as partial face surfaces (37, 38) and which face towards the crank bearing eye (12), and second subregions (26, 27), which are formed as partial face surfaces (39, 40) and which are averted from the crank bearing eye (12), wherein a parting line (28) separates the respective subregions (24, 25, 26, 27) of the face surfaces,
**characterized in that** the eccentric lever (3) surrounds the eccentric (4) exclusively in the first subregion (24, 25) of the eccentric (4), such that the eccentric (4) is surrounded only in certain regions.

2. Connecting rod according to Claim 1, **characterized in that** the first subregions (24, 25) have partial face surfaces (37, 38) which are parallel to one another, and the second subregions (26, 27) have bevelled partial face surfaces (39, 40) which are inclined with respect to one another.

3. Connecting rod according to Claim 1 or 2, **characterized in that** at least one step is formed between the first partial face surfaces (37, 38) and the second partial face surfaces (39, 40), wherein, in particular, the second partial face surfaces (39, 40) have a smaller spacing to one another than the first partial face surfaces (37, 38).

4. Connecting rod according to any of the preceding claims, **characterized in that** the eccentric lever segments (29, 30) have connecting portions (31, 32) which are parallel to one another and which are connected rotationally conjointly to the eccentric (4) .

5. Connecting rod according to Claim 4, **characterized in that** the connecting portions (31, 32) each have a semicircular recess which surrounds the first subregion (24, 25).

6. Connecting rod according to any of the preceding claims, wherein the parting line (28) between the first subregion (24, 25) and the second subregion (26, 27) runs through the eccentric axis (L).

7. Connecting rod according to any of the preceding claims, **characterized in that** the connecting portions (31, 32) are formed with planar surfaces at least in certain regions.

8. Connecting rod according to any of the preceding claims, wherein the eccentric lever (3) is formed from precision-cast steel.

9. Connecting rod according to any of Claims 1 to 7, **characterized in that** the eccentric lever (3) is produced by means of a metal injection moulding process.

10. Connecting rod according to any of the preceding claims, **characterized in that** the eccentric lever (3) and the eccentric lever segments (29, 30) are formed as one piece.

11. Connecting rod according to any of the preceding claims, **characterized in that** the support rods (10, 11) are articulatedly connected to the eccentric lever (3) by means of connecting bolts (35, 36).

12. Connecting rod according to any of the preceding Claims 1 to 10, **characterized in that** the support rods (10, 11) are articulatedly connected to the eccentric lever (3) by means of a ball-and-socket connection.

13. Connecting rod according to any of the preceding claims, **characterized in that** the eccentric lever (3) is provided so as to be welded to the eccentric (4) .

14. Internal combustion engine having at least one connecting rod (1) according to any of the preceding claims.

## Revendications

1. Bielle (1) pour un moteur à combustion interne à compression variable, comprenant
un œil de palier de levage (12) pour la liaison de la bielle (1) à un vilebrequin du moteur à combustion interne,
un œil de coussinet de bielle (13) pour la liaison de la bielle (1) à un piston de cylindre du moteur à combustion interne,
un dispositif de réglage à excentrique (2) pour le réglage d'une longueur effective de bielle (30), dans lequel le dispositif de réglage à excentrique (2) présente un excentrique (4) coopérant avec un levier d'excentrique (3) et relié de manière solidaire en rotation à celui-ci, excentrique dans lequel un axe de piston du piston de cylindre peut être correctement logé, dans laquelle le dispositif de réglage à excentrique (2) comporte deux cylindres (14, 15) dotés respectivement d'un piston (6, 7) qui est guidé de façon coulissante dans un alésage de cylindre (8, 9) et qui est relié à une barre d'appui (10, 11),
dans laquelle le levier d'excentrique (3) comporte plusieurs segments de levier d'excentrique (29, 30) et est relié de manière articulée aux barres d'appui (10, 11),
dans laquelle l'œil de coussinet de bielle (13) et l'excentrique (4) comportent respectivement des faces frontales dotées de premières régions partielles (24, 25) formées en tant que faces frontales partielles (37, 38) et tournées vers l'œil de palier de levage (12) et de deuxièmes régions partielles (26, 27) formées en tant que faces frontales partielles (39, 40) et opposées à l'œil de palier de levage (12), dans laquelle une ligne de séparation (28) sépare les régions partielles respectives (24, 25, 26, 27) des faces frontales,
**caractérisée en ce que** le levier d'excentrique (3) entoure l'excentrique (4) exclusivement dans la première région partielle (24, 25) de l'excentrique (4) de telle sorte que l'excentrique (4) est entouré seulement dans certaines régions.

2. Bielle selon la revendication 1, **caractérisée en ce que** les premières régions partielles (24, 25) comportent des faces frontales partielles (37, 38) parallèles l'une à l'autre et les deuxièmes régions partielles (26, 27) comportent des faces frontales partielles biseautées (39, 40) inclinées l'une par rapport à l'autre.

3. Bielle selon la revendication 1 ou 2, **caractérisée en ce qu'**au moins un gradin est formé entre les premières faces frontales partielles (37, 38) et les deuxièmes faces frontales partielles (39, 40), les deuxièmes faces frontales partielles (39, 40) présentant en particulier un plus petit espacement l'une par rapport à l'autre que les premières faces frontales partielles (37, 38).

4. Bielle selon l'une des revendications précédentes, **caractérisée en ce que** les segments de levier d'excentrique (29, 30) comportent des parties de liaison (31, 32) parallèles l'une à l'autre, lesquelles sont reliées de manière solidaire en rotation à l'excentrique (4) .

5. Bielle selon la revendication 4, **caractérisée en ce que** les parties de liaison (31, 32) comportent respectivement un évidement semi-circulaire, lequel entoure la première région partielle (24, 25).

6. Bielle selon l'une des revendications précédentes, dans laquelle la ligne de séparation (28) entre la première région partielle (24, 25) et la deuxième région partielle (26, 27) s'étend à travers l'axe d'excentrique (L) .

7. Bielle selon l'une des revendications précédentes, **caractérisée en ce que** les parties de liaison (31, 32) sont formées de manière plane au moins dans certaines régions.

8. Bielle selon l'une des revendications précédentes, dans laquelle le levier d'excentrique (3) est formé à partir d'un moulage de précision en acier.

9. Bielle selon l'une des revendications 1 à 7, **caractérisée en ce que** le levier d'excentrique (3) est prévu de manière fabriquée grâce à un procédé de moulage par injection de métal.

10. Bielle selon l'une des revendications précédentes, **caractérisée en ce que** le levier d'excentrique (3) et les segments de levier d'excentrique (29, 30) sont formés d'un seul tenant.

11. Bielle selon l'une des revendications précédentes, **caractérisée en ce que** les barres d'appui (10, 11) sont reliées de manière articulée au levier d'excentrique (3) au moyen d'axes de liaison (35, 36).

12. Bielle selon l'une des revendications précédentes 1 à 10, **caractérisée en ce que** les barres d'appui (10, 11) sont reliées de manière articulée au levier d'excentrique (3) au moyen d'une liaison à rotule.

13. Bielle selon l'une des revendications précédentes, **caractérisée en ce que** le levier d'excentrique (3) est prévu de manière soudée sur l'excentrique (4).

14. Moteur à combustion interne comprenant au moins une bielle (1) selon l'une des revendications précédentes.
